(19) Europäisches Patentamt

European Patent Office

Office européen des brevets

(11) **EP 1 083 081 A2**

(12) **EUROPÄISCHE PATENTANMELDUNG**

(43) Veröffentlichungstag:
**14.03.2001 Patentblatt 2001/11**

(51) Int. Cl.$^7$: **B60L 15/20**

(21) Anmeldenummer: **00118821.8**

(22) Anmeldetag: **31.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **09.09.1999 DE 19943067**

(71) Anmelder:
**Kiepe Elektrik GmbH & Co. KG
40599 Düsseldorf (DE)**

(72) Erfinder:
**Lohner, Andreas, Dr. Ing.
40597 Düsseldorf (DE)**

(74) Vertreter:
**Feder, Wolf-Dietrich, Dr. Dipl.-Phys.
Dr. Wolf-D. Feder, Dr. Heinz Feder
Dipl.-Ing. P.-C. Sroka
Dominikanerstrasse 37
40545 Düsseldorf (DE)**

(54) **Verfahren zur Dämpfung mechanischer Torsionsschwingungen zwischen einem Antriebsmotor und dem Antriebsstrang eines Fahrzeugs**

(57) Ein Verfahren zur Dämpfung mechanischer Torsionsschwingungen zwischen einem momentengeregelten, drehzahlvariablen Antriebsmotor, insbesondere einem elektrischen Asynchronmotor, und einem mit diesem Antriebsmotor mechanisch gekoppelten, niederfrequent schwingungsfähigen Antriebsstrang eines Fahrzeugs. Es ist ein Regelkreis vorgesehen, dem ein Soll-Wert für das Drehmoment sowie eine den Ist-Wert des Drehmoments charakterisierende Größe zugeführt wird und der einen auf ein Stellglied zur Änderung des Drehmoments einwirkendes Korrektursignal abgibt. Zusätzlich wird dem Regelkreis eine schlupfkorrigierende Komponente zugeführt, die proportional der Differenz zwischen der Ist-Drehzahl des Motors und der Raddrehzahl des Fahrzeugs ist.

FIG. 2

EP 1 083 081 A2

**Beschreibung**

Die Erfindung betrifft ein Verfahren zur Dämpfung mechanischer Torsionsschwingungen zwischen einem momentengeregelten, drehzahlvariablen Antriebsmotor, insbesondere einem elektrischen Asynchronmotor, und einem mit diesem Antriebsmotor mechanisch gekoppelten, niederfrequent schwingungsfähigen Antriebsstrang eines Fahrzeugs mittels eines Regelkreises, dem ein Soll-Wert für das Drehmoment sowie eine den Ist-Wert des Drehmoments charakterisierende Größe zugeführt wird und der ein auf ein Stellglied zur Änderung des Drehmoments einwirkendes Korrektursignal abgibt.

Die Betriebserfahrung bei Nahverkehrsfahrzeugen, wie Trolley-Bussen, Straßenbahnen usw., welche durch einen momentengeregelten, drehzahlvariablen Antriebsmotor, insbesondere einen elektrischen Asynchronmotor angetrieben werden, hat gezeigt, daß deren Antriebsstrang bei abrupten Lastwechseln mechanische Torsionsschwingungen ausführt, die sich beispielsweise in einer schwingungsbehafteten Maschinendrehzahl widerspiegeln. Beim generatorischen Verzögerungsvorgang werden ebenfalls mechanische Torsionsschwingungen erregt, die mit abnehmender Maschinendrehzahl in der Amplitude zunehmen. Die Frequenz dieser Schwingungen liegt beispielsweise bei Trolley-Busantrieben zwischen 2 Hz und 4 Hz. Die niederfrequentenTorsionsschwingungen sind für den Fahrgast als transversales "Ruckeln" zu bemerken. Zusätzlich belasten sie die mechanischen Komponenten des Antriebs unverhältnismäßig hoch und beschleunigen deren Verschleiß.

Ähnliche Erscheinungen können auch bei Kraftfahrzeugen mit einem Verbrennungsmotor auftreten, wenn ein momentengeregelter Motor an ein niederfrequent schwingungsfähiges mechanisches System gekoppelt ist. In diesem Falle treten die Schwingungen allerdings nur bei abrupten Wechseln der Gaspedalstellung auf, während sie beim Bremsen nicht vorhanden sind, da in diesem Falle keine generatorische Verzögerung vorliegt.

Bisher bekannte Ansätze zur Lösung des Problems der zwischen dem Antriebsmotor und dem Antriebsstrang auftretenden Torsionsschwingungen sind zumeist mechanischer Natur. So wird z.B. versucht, die Eigenfrequenzen des Systems zu ausreichend hohen oder niedrigen Werten hin zu verschieben, die nicht angeregt werden können. Die erste Eigenfrequenz wird im wesentlichen von der Masse des Maschinenrotors und der Gesamttorsionssteifigkeit des mechanischen Antriebs bestimmt. Diese Größen sind aber ohne größeren Aufwand nur unwesentlich veränderbar, so daß dieser Lösungsansatz nicht zu befriedigenden Ergebnissen führt.

Denkbar wäre auch eine Kompensation der Schwingungen durch einen mechanischen Drehschwingungstilger. Abgesehen von kostenverursachenden, das Gewicht und Volumen des Antriebs erhöhenden Zusatzkomponenten, hat dieser Lösungsansatz den Nachteil, daß nur eine Frequenz gedämpft wird. Damit kann sich dieses System nicht auf eine, beispielsweise alterungsbedingte Verschiebung der Eigenfrequenz einstellen.

Eine Schwingungsisolation, beispielsweise mit einer speziellen Kupplung zwischen Antriebsmotor und schwingungsfähigem Antriebsstrang geht immer mit Einschränkungen in der Dynamik des Antriebs einher.

Regelungstechnische Lösungsansätze basieren meist auf einer Berechnung des aktuellen Maschinenmomentes aus Meßgrößen. Diese auch vom Maschinenmodell abhängige Berechnung ist meist stark fehlerbehaftet, so daß auch hier keine befriedigenden Ergebnisse erzielt werden können.

Der Erfindung liegt die Aufgabe zugrunde, ein Verfahren der eingangs und im Oberbegriff des Patentanspruchs 1 beschriebenen Art zu schaffen, mit dem es möglich ist, beim Anfahren oder Bremsen auftretende Torsionsschwingungen derart in die Regelung zu integrieren, daß die durch sie hervorgerufenen Schwingungen in der Drehzahl und dem Drehmoment des Motors, der Raddrehzahl und sonstiger regelungstechnisch relevanter Größen stark gedämpft werden.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht demnach darin, dem Regelkreis ein zusätzliches Signal zuzuführen, das proportional der Differenz zwischen der Ist-Drehzahl des Motors und der Raddrehzahl des Fahrzeugs ist. Hierbei gibt es grundsätzlich zwei Ausführungsvarianten des Verfahrens. Bei einer ersten Ausführungsform (Patentanspruch 2) werden die tatsächliche Raddrehzahl und die Ist-Drehzahl des Motors gemessen und das aus diesen Messungen abgeleitete Signal dem Regelkreis zugeführt. Da diese Ausführungsform einen zusätzlichen Sensor zur Aufnahme der tatsächlichen Raddrehzahl erfordert, ist gemäß einer zweiten Ausführungsform des erfindungsgemäßen Verfahrens (Patentanspruch 3) vorgesehen, die Raddrehzahl als "virtuelle Raddrehzahl" aus verschiedenen Größen des Systems zu berechnen und aus dieser virtuellen Raddrehzahl die dem Regelkreis zuzuführende Komponente zu bestimmen.

Weitere vorteilhafte Ausführungsvarianten des erfindungsgemäßen Verfahrens werden weiter unten anhand von Ausführungsbeispielen erläutert.

Es hat sich herausgestellt, daß, wie ebenfalls weiter unten anhand von Diagrammen gezeigt, mittels des erfindungsgemäßen Verfahrens eine ausgezeichnete Bedämpfung der Schwingungen erzielt werden kann und damit das "Ruckeln" des Fahrzeugs beim Anfahren und/oder Bremsen eliminiert werden kann.

Im folgenden werden die Merkmale und Vorteile des erfindungsgemäßen Verfahrens anhand von Ausführungsbeispielen, die unter Bezugnahme auf die beigefügten Zeichnungen beschrieben werden, näher erläutert.

In den Zeichnungen zeigen:

Fig. 1 in einem Diagramm den gemessenen Zeitverlauf des der Sollwertgeberstellung entsprechenden Solimomentes Msoll und die gemessenen Zeitverläufe des Istmomentes Mmotor und der Istdrehzahl n des Antriebsmotors beim Bremsvorgang eines Trolley-Busses ohne regelungstechnische Berücksichtigung der Torsionsschwingungen zwischen Antriebsmotor und Antriebsstrang;

Fig. 2 in einem Prinzipschaltbild einen elektromechanischen Antrieb in modellhafter Darstellung;

Fig. 3 ein auf einen Zweimassenschwinger reduziertes, vereinfachtes Modell eines mechanischen Antriebssystems;

Fig. 4 ein Maschinenmodell für eine feldorientierte Regelung eines Asynchronmotors.

Fig. 5 in einem Blockschaltbild den Flußregler für die feldorientierte Regelung nach Fig. 4;

Fig. 6 in einem Blockschaltbild den Momentenregler für die feldorientierte Regelung nach Fig. 4;

Fig. 7 in einem Blockschaltbild eine Einrichtung zur Berechnung der virtuellen Raddrehzahl;

Fig. 8 in einem Blockschaltbild eine erste Ausführungsform eines schlupfkorrigierten Momentenreglers;

Fig. 9 in einer Darstellung analog Fig. 8 eine zweite Ausführungsform eines schlupfkorrigierten Momentenreglers;

Fig. 10 in einer Darstellung analog Fig. 1 das Diagramm für den gemessenen Zeitverlauf des der Sollwertgeberstellung entsprechenden Sollmomentes Msoll und die gemessenen Zeitverläufe des Istmomentes Mmotor und der Istdrehzahl n des Antriebsmotors beim Bremsvorgang des Trolley-Busses mit regelungstechnischer Berücksichtigung der Torsionsschwingungen zwischen Antriebsmotor und Antriebsstrang.

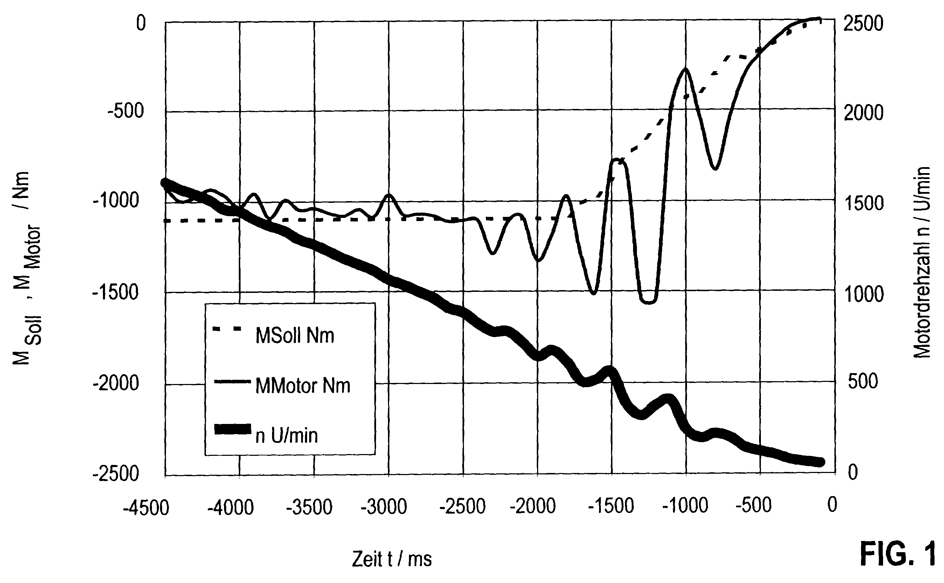

Fig. 1 zeigt eine Messung einiger relevanter Größen bei einem Bremsvorgang eines Trolley-Busses. Aufgetragen ist der Zeitverlauf der Größen, Motordrehzahl n sowie Soll-Drehmoment Msoll und Ist-Drehmoment Mmotor des Antriebsmotors. Es ist zu erkennen, daß diese Größen mit der ersten Eigenfrequenz des mechanischen Antriebsstrangs oszillieren. Das gleiche gilt für sämtliche anderen, nicht dargestellten regelungstechnisch relevanten Größen.

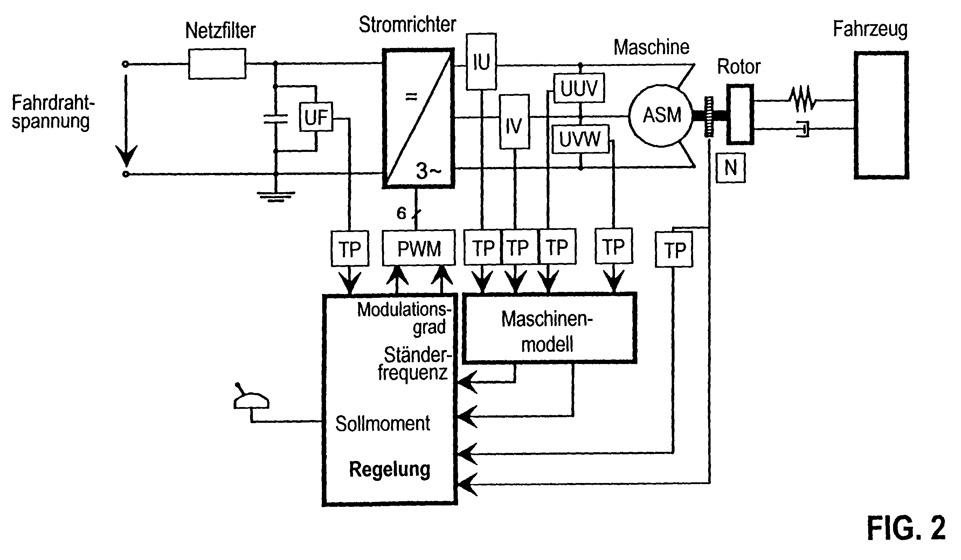

Zur Erläuterung des Verfahrens, mittels dessen diese, das Ruckeln des Fahrzeugs verursachenden Schwingungsvorgänge ausgeregelt werden, werden im folgenden anhand der Fig. 2 bis 6 der Zeichnungen einige Betrachtungen anhand eines Modells für einen elektromechanischen Antrieb durchgeführt.

Fig. 2 zeigt in einer vereinfachten Skizze das Modell eines elektromechanischen Antriebs.

Das dargestellte Modell besteht aus einem Modell für die Asynchronmaschine, einem Netzfilter und einem Stromrichter. Der Stromrichter ist vereinfachend als dreiphasige, gesteuerte sinusförmige Spannungsquelle ausgeführt. Diese Teile des elektrischen Modells sind über Tiefpässe TP an die in Fig. 2 mit "Maschinenmodell" und "Regelung" bezeichnete Regeleinrichtung angeschlossen, der eine Größe für das "Sollmoment" zugeführt wird. Die Ausgangsgröße der Regeleinrichtung ist das Verhältnis von Ständerspannung $U_S$ zu Filterspannung $U_F$, das häufig auch als Modulationsgrad m bezeichnet wird. Der PWM-Steuersatz setzt dann den Modulationsgrad m und die Ständerfrequenz $f_S$ in die Ansteuersignale des Stromrichters um.

Um die Drehzahldynamik der Regeleinrichtung zu unterstützen, wird auch der Drehzahlistwert N eingekoppelt.

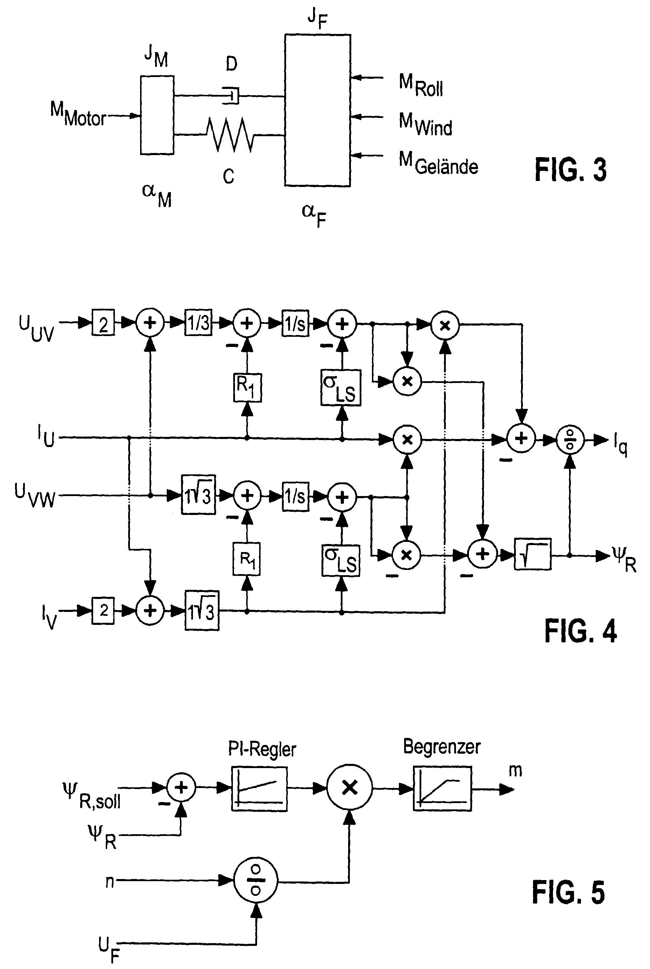

Der mechanische Antriebsstrang wird vereinfachend durch einen Zweimassentorsionsschwinger nachgebildet, wie er in Fig. 3 noch einmal ausführlicher dargestellt ist. Am Trägheitsmoment $J_M$ des Antriebsmotors greift das Antriebsmoment $M_{Motor}$ an. $\alpha_M$ ist der Verdrehwinkel des Rotors und $\alpha_F$ der Verdrehwinkel des Rades. Die Drehzahlen werden im weiteren wie folgt bezeichnet: $\alpha_M = n$, $\alpha_F = n_{BUS}$. Am Trägheitsmoment $J_F$ des Fahrzeugs greifen Rollmomente $M_{Roll}$, geländeabhängige Momente $M_{Gelände}$ und Windwiderstandsmoment $M_{Wind}$ an. Die Eigenfrequenz des Systems ist durch die Torsionssteifigkeit C bestimmt, die Dämpfungskonstante D wird als niedrig angenommen. Getriebeübersetzungen sind in den genannten Größen berücksichtigt.

Der in Fig. 3 beschriebene Zweimassenschwinger wird durch die nachfolgend angegebenen Differentialgleichungen A und B beschrieben.

$$A: M_{Motor} - (\alpha_M - \alpha_F) \cdot C - (\dot\alpha_M - \dot\alpha_F) \cdot D - J_M \cdot \ddot\alpha_M = 0$$

$$B: (\alpha_M - \alpha_F) \cdot C + (\dot{\alpha}_M - \dot{\alpha}_F) \cdot D - J_F \cdot \ddot{\alpha}_F = M_{Roll} + M_{Wind} + M_{Gelände}$$

Fig. 4 zeigt eine Ausführung des "Maschinenmodells" für die feldorientierte Regelung für den Asynchronmotor nach Fig. 2. In diesem Modell wird aus jeweils zwei Maschinenströmen und -spannungen der Betrag des momentanen Rotorflusses $\psi_R$ und der drehmomentproportionalen Stromkomponente $I_q$ berechnet.

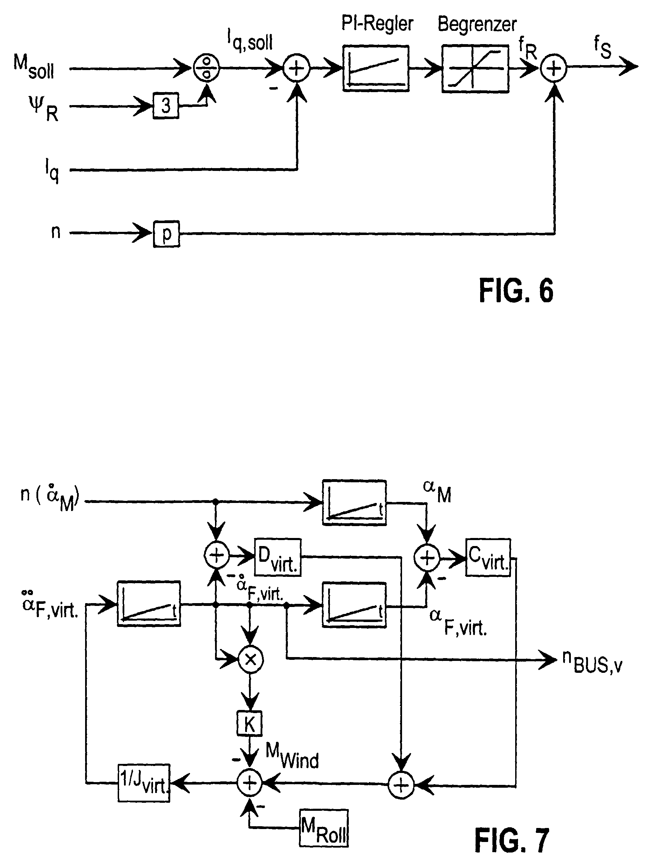

Der Rotorfluß $\psi_R$ und die drehmomentproportionale Stromkomponente $I_q$ werden jeweils mit einem PI-Regler unabhängig voneinander auf ihre Sollwerte $\psi_R$, soll und $I_{q, soll}$ geregelt. Die Struktur des Flußreglers ist in Fig. 5 und die Struktur des Momentenreglers in Fig. 6 dargestellt.

Da bei konstantem Fluß das Drehmoment der Asynchronmaschine proportional zur Rotorfrequenz ist, kann die Ausgangsgröße des Reglers nach Fig. 6 direkt als Rotorfrequenz $f_R$ interpretiert werden. Durch Addition mit $p \cdot n$ erhält man dann die vom PWM-Steuersatz einzustellende Ständerfrequenz $f_S$.

Bei dem oben beschriebenen Regelsystem treten beim Bremsvorgang die weiter oben anhand von Fig. 1 erläuterten Schwingungsvorgänge auf.

Die Neigung dieses Systems zu ungedämpften mechanischen Torsionsschwingungen ist ursächlich in der Regelungsstruktur begründet. Weder der oben beschriebene Momenten- noch der Flußregler sind in der Lage, einen dynamischen Schlupf zwischen der Motordrehzahl n und der Raddrehzahl $n_{BUS}$ auszuregeln. Durch die Einkopplung der Istdrehzahl ($f_S = n \cdot p + f_R$) ist das Antriebssystem ohne einen zwischengeschalteten Regler zurückgekoppelt. So kann es z.B. beim Bremsvorgang sogar zu einer Mitkopplung und damit zu einer Verstärkung der mechanischen Schwingungen kommen.

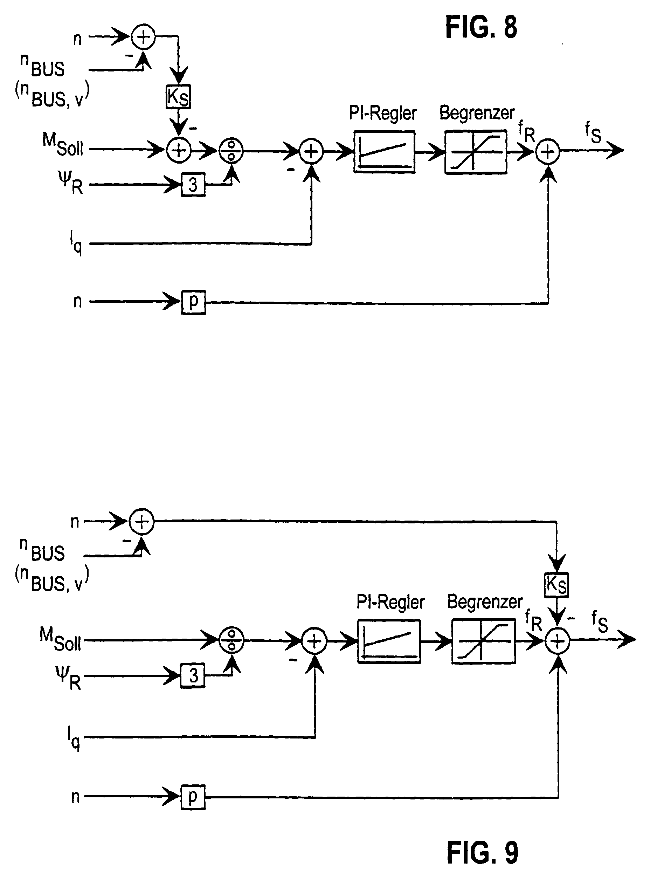

Im folgenden wird nunmehr anhand der Fig. 7 bis 9 der Lösungsansatz für ein Verfahren zur Dämpfung der auftretenden Schwingungen beschrieben. Bei dieser Ausführung des Verfahrens wird dem Momentenregler eine schlupfkorrigierende Komponente zugeführt. Hierfür sind zwei mögliche Ausführungsvarianten in den Fig. 8 und 9 dargestellt.

Um einen zusätzlichen Sensor zur Aufnahme der tatsächlichen Raddrehzahl $n_{BUS}$ zu vermeiden, wird eine sogenannte "virtuelle Raddrehzahl" $n_{BUS, v}$ als Ersatz für $n_{BUS}$ berechnet. Dabei wird das durch die Differentialgleichungen A und B beschriebene System modifiziert. Da auf den Drehzahlmeßwert $n = \alpha_M$ zurückgegriffen werden kann, werden die Gleichungen A und B zur Gleichung C reduziert.

$$C: (\alpha_M - \alpha_F) C + (\dot{\alpha}_M - \dot{\alpha}_F) D - J_F \ddot{\alpha}_F = M_R + M_W$$

In dieser Gleichung ist nunmehr $\alpha_M$ der Drehwinkel des Motors, $\alpha_F$ der virtuelle Drehwinkel des Rades, $J_F$ ein virtuelles Trägheitsmoment des Fahrzeugs mit dem Antriebsstrang bei vollbelandenem Fahrzeug, C eine virtuelle Torsionssteifigkeit, die der realen Torsionssteifigkeit entspricht, D eine virtuelle Dämpfungskonstante und $M_R$ bzw. $M_W$ virtuelle Werte für Rollmomente und Windmomente. Geländeabhängige Momente werden bei dieser Berechnung nicht berücksichtigt.

Die Berechnung der virtuellen Raddrehzahl $\dot{\alpha}_F = n_{BUS, v}$ ist aus dem Blockschaltbild gemäß Fig. 7 ablesbar. Es wird als einzige veränderliche Eingangsgröße die gemessene Motordrehzahl $\dot{\alpha}_M = n$ benötigt.

Gemäß den Fig. 8 und 9 ist der Momentenregler gemäß Fig. 6 durch Einkopplung des Korrekturglieds ($n - n_{BUS, v}$) $K_S$ erweitert. Hierbei ist die virtuelle Dämpfungskonstante D wesentlich höher gewählt, als es dem Wert der realen Dämpfungskonstante entspricht. Der Wert der virtuellen Dämpfungskonstante kann um ca. den Faktor 1000 größer sein als der Wert der realen Dämpfungskonstante.

Die virtuelle Torsionssteifigkeit C entspricht im wesentlichen der realen Torsionssteifigkeit.

Es hat sich gezeigt, daß mit der Ausführungsform nach Fig. 9 noch bessere Dämpfungseigenschaften erzielt werden, als es mit der Ausführungsform nach Fig. 8 der Fall ist.

Es hat sich gezeigt, daß gemäß diesem Verfahren die Sprungantworten des mechanischen Systems auf abrupte Lastwechsel stark gedämpft werden. Damit ist die erste mechanische Eigenfrequenz des Antriebs im gesamten Drehzahlbereich, insbesondere beim generatorischen Verzögerungsvorgang eliminiert.

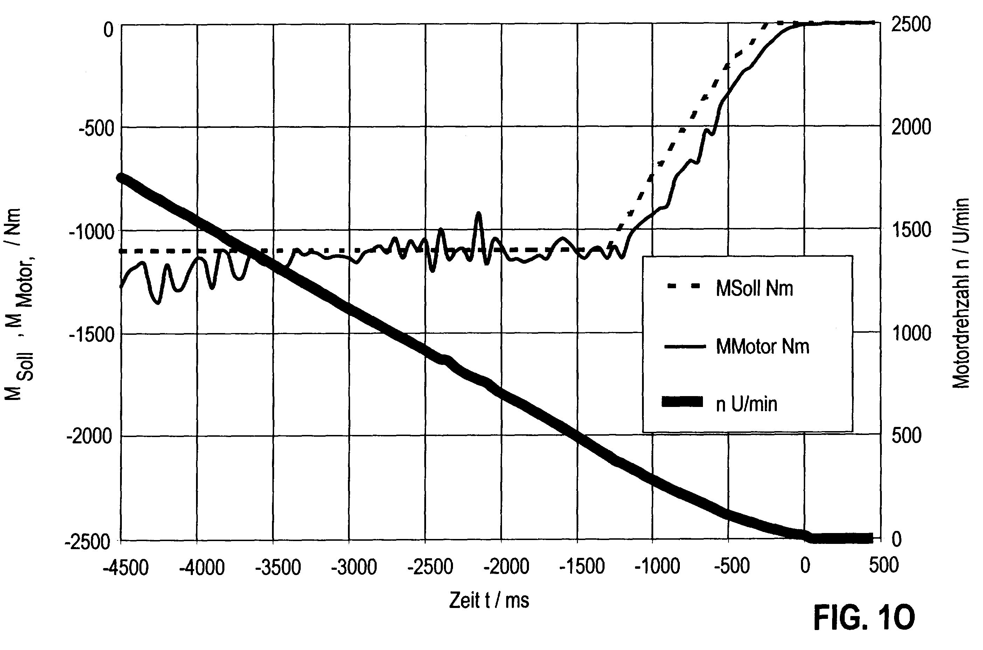

Fig. 10 zeigt in einer Darstellung analog Fig. 1 das gemessene Zeitverhalten der entsprechenden relevanten Größen Motordrehzahl n, Soll-Drehmoment $M_{Soll}$ und Ist-Drehmoment $M_{Motor}$ bei Anwendung des obengenannten Regelverfahrens.

Es ist klar zu erkennen, daß die Schwingungen beim Verzögerungsvorgang so stark gedämpft sind, daß ein Ruckeln des Fahrzeugs nicht mehr auftritt.

Es hat sich gezeigt, daß auch die anderen regelungstechnisch relevanten Größen nunmehr schwingungsfrei sind. Es hat sich weiterhin gezeigt, daß Schwingungen im gesamten Drehzahlbereich zu vernachlässigbar kleinen Werten gedämpft werden.

Da sowohl Blockier- als auch Gleitvorgänge vorn Drehzahlverlauf her der Sprungantwort des Zweimassenschwingers bis zum Erreichen des ersten Amplitudenmaximums gleichen, reagiert der schlupfkompensierte Regler mit virtuellem Rad beim Einsetzen eines Gleit- bzw. Blockiervorgangs mit der Wegnahme des Antriebs- bzw. Bremsmoments. Diese Regelungsreaktion wirkt also dem Durchdrehen bzw. Blockieren der Antriebsräder entgegen, so daß das Fahrzeug in einem stabilen Fahrzustand gehalten werden kann, bevor der eigentliche Schleuder-/Gleitschutz anspricht.

Es wird darauf hingewiesen, daß das beschriebene Regetungsverfahren auf andere Antriebssysteme mit momentengeregeltem, drehzahlvariablem Antriebsmotor übertragbar ist. So kann es beispielsweise zur Dämpfung des "Ruckelns" eines Verbrennungskraftfahrzeugs in das Regelungssystem für die Einspritzelektronik integriert werden.

**Patentansprüche**

1. Verfahren zur Dämpfung mechanischer Torsionsschwingungen zwischen einem momentengeregelten, drehzahlvariablen Antriebsmotor, insbesondere einem elektrischen Asynchronmotor, und einem mit diesem Antriebsmotor mechanisch gekoppelten, niederfrequent schwingungsfähigen Antriebsstrang eines Fahrzeugs mittels eines Regelkreises, dem ein Soll-Wert für das Drehmoment sowie eine den Ist-Wert des Drehmoments charakterisierende Größe zugeführt wird und der ein auf ein Stellglied zur Änderung des Drehmoments einwirkendes Korrektursignal abgibt, dadurch gekennzeichnet, daß dem Regelkreis außer dem Soll-Wert für das Drehmoment und der den Ist-Wert des Drehmoments charakterisierenden Größe eine schlupfkomgierende Komponente zugeführt wird, die proportional der Differenz zwischen der Ist-Drehzahl des Motors und der Raddrehzahl des Fahrzeugs ist.

2. Verfahren nach Anspruch 1, dadurch gekennzeichnet, daß die tatsächliche Raddrehzahl und die Ist-Drehzahl des Motors durch Sensoren gemessen und dem Regelkreis zugeführt werden.

3. Verfahren nach Anspruch 1, dadurch gekennzeichnet, daß die Raddrehzahl als "virtuelle Raddrehzahl" ($\alpha_F$) in einer Modellrechnung aus dem Ist-Wert der Motordrehzahl ($\alpha_M$), einem virtuellen Trägheitsmoment ($J_F$) des Fahrzeugs mit dem Antriebsstrang, einer virtuellen Torsionssteifigkeit (C) des Antriebsstrangs, einer virtuellen Dämpfungskonstante (D) sowie virtuellen Werten für Rollmomente ($M_R$) und Windmomente ($M_W$) am Fahrzeug gemäß einer Differenzialgleichung:
$$(\alpha_M - \alpha_F)\, C + (\dot{\alpha}_M - \dot{\alpha}_F)\, D - J_F \ddot{\alpha}_F = M_R + M_W,\ [\alpha_M = \text{Drehwinkel des Motors},\ \alpha_F = \text{virtueller Drehwinkel des Rades}]$$
mittels eines Rechners ermittelt und dem Regelkreis zugeführt wird, wobei die virtuellen Größen des Systems fest vorgegeben werden.

4. Verfahren nach einem der Ansprüche 1-3, dadurch gekennzeichnet, daß die schlupfkorrigierende Komponente ($n - n_{Bus}$) $K_S$ dem Soll-Wert ($M_{Soll}$) für das Drehmoment als Korrekturmoment hinzuaddiert wird.

5. Verfahren nach Anspruch 3, dadurch gekennzeichnet, daß die schlupfkorrigierende Komponente ($n - n_{Bus}$) $K_S$ dem vom Regelkreis abgegebenen Korrektursignal ($f_R$) hinzuaddiert wird.

6. Verfahren nach Anspruch 3, dadurch gekennzeichnet, daß dem virtuellen Trägheitsmoment ($J_F$) die Masse des vollbeladenen Fahrzeugs zugrundegelegt wird und die virtuelle Torsionssteifigkeit (C) der realen Torsionssteifigkeit entspricht.

7. Verfahren nach Anspruch 3, dadurch gekennzeichnet, daß der virtuellen Dämpfungskonstante (D) ein Wert zugrundegelegt wird, der wesentlich größer ist als der Wert der realen Dämpfungskonstante.

8. Verfahren nach Anspruch 7, dadurch gekennzeichnet, daß der Wert der virtellen Dämpfungskonstante um ca. den Faktor 1000 größer ist als der Wert der realen Dämpfungskonstante.

9. Verfahren nach einem der Ansprüche 1 bis 8 bei einem Fahrzeugantrieb, insbesondere für einen Trolley-Bus, mit Asynchronmotor mit unabhängigen Regelkreisen für den Rotorfluß und das Drehmoment, dadurch gekennzeichnet, daß im Regelkreis für das Drehmoment aus dem Soll-Wert ($M_{Soll}$) für das Drehmoment und einer dem momentanen Rotorfluß ($\Psi_R$) proportionalen Größe ein Soll-Wert ($I_{qSoll}$) für eine drehmomentproportionale Stromkomponente gebildet wird, die mit dem Ist-Wert ($I_q$) dieser Stromkomponente verglichen wird zur Bildung einer die Rotorfrequenz ($f_R$) darstellenden Größe als vom Regelkreis abgegebenes Korrektursignal.

10. Verfahren nach Anspruch 9, dadurch gekennzeichnet, daß dem vom Regelkreis abgegebenen Korrektursignal ($f_R$) ein dem Produkt aus dem Ist-Wert (n) der Motordrehzahl und dem Motorschlupf (p) entsprechender Wert hinzuaddiert wird zur Erzeugung eines die Ständerfrequenz ($f_s$) charakterisierenden Signals, das einem Steuerglied zur Einstellung der Ständerfrequenz zugeführt wird.

FIG. 1

Netzfilter Stromrichter

Maschine

Rotor

Fahrzeug

Fahrdraht-spannung

UF

=

3~

IU

IV

UUV

UVW

ASM

N

6

TP PWM TP TP TP TP TP

Modulations-grad

Maschinen-modell

Ständer-frequenz

Sollmoment

**Regelung**

FIG. 2

**FIG. 3**

**FIG. 4**

**FIG. 5**

FIG. 6

FIG. 7

9

# FIG. 8

# FIG. 9

FIG. 10